# EUROPÄISCHE PATENTSCHRIFT

(11) **EP 1 405 829 B1**
(45) Veröffentlichungstag und Bekanntmachung des Hinweises auf die Patenterteilung: **01.07.2009**
(21) Anmeldenummer: 03016851.2
(22) Anmeldetag: 24.07.2003
(51) Int. Cl.: C02F 1/78

(54) **Reaktionsgefäss zur Aufbereitung von Wasser mit Ozon**
Reaction vessel for the treatment of water by ozonation
Réacteur pour le traitement de l'eau par ozonisation

(30) Priorität: 04.10.2002 DE 10246452
(43) Veröffentlichungstag der Anmeldung: 07.04.2004
(73) Patentinhaber: Dinotec GmbH Wassertechnologie und Schwimmbadtechnik, 63477 Maintal (DE)
(72) Erfinder: Steffens, Robert, Dipl.-Ing., 65205 Wiesbaden (DE)
(74) Vertreter: KEIL & SCHAAFHAUSEN Patentanwälte

(56) Entgegenhaltungen:
- CH-A- 669 185
- DE-A- 19 509 066
- US-A- 4 572 821
- US-A- 5 376 265
- PATENT ABSTRACTS OF JAPAN vol. 018, no. 111 (C-1170), 23. Februar 1994 (1994-02-23) & JP 05 305287 A (KUBOTA CORP), 19. November 1993 (1993-11-19)
- PATENT ABSTRACTS OF JAPAN vol. 1997, no. 03, 31. März 1997 (1997-03-31) & JP 08 299974 A (NKK CORP), 19. November 1996 (1996-11-19)
- PATENT ABSTRACTS OF JAPAN vol. 1998, no. 01, 30. Januar 1998 (1998-01-30) & JP 09 239381 A (MIZU:KK), 16. September 1997 (1997-09-16)
- PAHL M H ET AL: "Statische Mischer und ihre Anwendung" CHEMIE. INGENIEUR. TECHNIK, VERLAG CHEMIE GMBH. WEINHEIM, DE, Bd. 52, Nr. 4, 1980, Seiten 285-291, XP002147745 ISSN: 0009-286X

## Beschreibung

Die vorliegende Erfindung betrifft ein Reaktionsgefäß und ein Verfahren zur Aufbereitung von Wasser, insbesondere von Trink- oder Schwimmbadwasser, mit Ozon mit einem Eintritt für ozonhaltiges Wasser, einem Austritt für aufgereinigtes Wasser und einem Auslass für ggf. restozonhaltige Ballastluft. Derartige Reaktionsgefäße können in Trinkwasser- bzw. Schwimmbadwasseraufbereitungsanlagen eingesetzt werden, denen zum Abbau organischer Substanzen, Bakterien und anderer Verunreinigungen Ozon zugesetzt wird.

Bei der Ozon-Desinfektion von Schwimmbadwasser wird das Ozon dem umgewälzten Hauptstrom oder einem Teilstrom des Schwimmbadwassers üblicherweise in einer Konzentration von ca. 1 bis 1,2 g/m³ zugesetzt und in einen Reaktionsbehälter geführt. Über eine Entlüftungsanlage werden gasförmiges Restozon und Ballastluft abgeführt. Hierbei wird das Ozon in einem Aktivkohlefilter zu Kohlendioxid umgesetzt, so dass die austretende Luft frei von Ozon ist. Das restliche, in Wasser gelöste Ozon, welches nicht mit organischen Substanzen in Reaktion getreten ist oder anderweitig abgebaut wurde, wird außerhalb des Reaktionsgefäßes durch eine Aktivkornkohlefilteranlage beseitigt, damit das dem Schwimmbad zugeführte Wasser im Wesentlichen frei von Ozon ist.

Bei einem in der DE 100 22 093 A1 beschriebenen Verfahren wird auf eine Aktivkornkohlefilteranlage verzichtet und lediglich ein Teilwasserstrom mit Ozon beaufschlagt. Der Teilwasserstrom wird nach der Reaktionsstrecke wieder dem Hauptwasserstrom zugeführt und durch diesen verdünnt. Durch eine Regelung wird der Ozoneintrag in den Teilwasserstrom so dosiert, dass der Restozongehalt in dem Schwimmbadwasser unterhalb des zulässigen Grenzwertes von 0,05 mg/l liegt.

Die bisher bekannten Reaktionsgefäße zur Aufbereitung von Trink- und/oder Schwimmbadwasser sind in der Regel kesselförmig ausgebildet und weisen einen im unteren Bereich seitlich angeordneten Eintritt für das mit Ozon beaufschlagte, aufzureinigende Wasser, einen im oberen Bereich ebenfalls seitlich angeordneten Austritt für das aufgereinigte Wasser sowie einen Auslass zur Abfuhr von gasförmigem Restozon und Ballastluft auf. Das mit Ozon beaufschlagte, aufzureinigende Wasser wird in einer im Kessel befindlichen Rohrleitung geschlossen zum Kesselboden geführt und tritt am unteren Ende dieser Rohrleitung in das Kesselinnere aus. Durch die Art der Wasserführung wird jedoch keine homogene Verteilung der Gasblasen in dem aufzureinigenden Wasser und keine intensive Durchmischung der Gas- und Flüssigphase erreicht, so dass die aufzureinigende wässrige Phase infolge eines lediglich unzureichenden Gaslöseprozesses nur einen signifikant unterhalb der Sättigungskonzentration liegenden Gehalt an Ozon aufweist und die enthaltenen Verunreinigungen nur unzureichend abgebaut werden können. Zum anderen bilden sich aufgrund der Strömungsgeschwindigkeit und des hohen Dichteunterschieds zwischen den Gasblasen und der wässrigen Phase in dem Mantelvolumen des Reaktionskessels unkontrollierte Turbulenzen, die zu Kurzschlussströmungen mit deutlich unterschiedlichen Ozongehalten führen. Daher ist die wässrige Phase über den Querschnitt des Reaktionsgefäßes gesehen ungleichmäßig mit Ozon beladen, so dass kein repräsentative Messprobe entnommen werden kann, welche nach Bestimmung des Ozongehaltes eine zuverlässige Steuerung der Ozonerzeugung und des Ozoneintrags vor dem Reaktionsgefäß und somit eine zuverlässige Regelung des Restozongehaltes in der wässrigen Phase nach dem Austritt aus dem Reaktionsgefäß zuließe.

Aus JP 05 305287 ist eine Reaktionseinrichtung bekannt, bei der unbehandeltes Wasser vor Eintritt in ein Innenrohr mit ozonierter Luft vermischt wird. Dieses Gemisch wird zunächst in dem Innenrohr nach unten geführt, bevor es sich einem darüber gestülpten Außenrohr wieder nach oben bewegt. Am oberen Ende des Außenrohrs gelangt das Gemisch in den Reaktionsbehälter, in dem das Gemisch mittels eines statischen Mischers umgerührt wird.

Aus JP 08 299974 ist ein Reaktionsgefäß bekannt, bei der dem oberen Ende eines Innenrohrs Wasser mit einem ozonierten Gas zugeführt wird. In diesem Rohr bewegt sich das Gemisch nach unten und wird nach einer Umlenkung am unteren Ende dieses Rohrs in einem äußeren Rohr wieder nach oben geleitet. An dem äußeren Rohr sind mehrere Trennplatten angeordnet, die sich in Richtung der Achse des Rohrs erstrecken und das Volumen in dem äußeren Rohr aufteilen.

Ein ähnliches Reaktionsgefäß ist in der US 4,572,821 A beschrieben, wobei ein zu behandelndes Fluid zusammen mit ozoniertem Gas durch mehrere sich vertikal erstreckende Rohre von oben in ein Reaktionsgefäß eingeführt wird und unten aus den Rohren austritt. Das Fluid strömt anschließend zwischen den Rohren und dem Mantel des Reaktionsgefäßes nach oben, wobei zur besseren Durchmischung zahlreiche Leitflügel vorgesehen sind, die eine turbulente Strömung herbeiführen. Am oberen Ende des Reaktionsgefäßes wird das mit dem Ozon durchmischte Fluid über einen Auslass abgezogen.

JP 09 239381 zeigt eine Vorrichtung zum Behandeln von Wasser mit Chemikalien, bei der das Wasser im Wechsel auf und ab in nebeneinanderliegenden Röhren geführt wird. Am oberen bzw. unteren Ende dieser Röhren ist jeweils ein Kasten angeordnet, in dem die Umlenkung des Wassers erfolgt.

Aufgabe der Erfindung ist es daher, eine ausreichend lange und einheitliche Verweilzeit des mit Ozon beaufschlagten und aufzureinigenden Wassers sowie eine optimale Lötung des Ozons in der wässrigen Phase zu gewährleisten, um eine möglichst vollständige Reaktion des Ozons mit den Verunreinigungen zu erreichen. Ferner soll eine zuverlässige Regelung des Restozongehaltes in der wässrigen Phase nach dem Austritt aus dem Reaktionsgefäß ermöglicht werden.

Erfindungsgemäß wird diese Aufgabe durch ein Reaktionsgefäß mit den Merkmalen des Anspruchs 1 und ein Verfahren mit den Merkmalen des Anspruchs 18 gelöst.

Vorteilhafte Ausgestaltungen der Erfindung ergeben sich aus den Unteransprüchen.

Überraschenderweise ermöglicht das erfindungsgemäße Reaktionsgefäß nicht nur eine nahezu vollständige Aufreinigung des Wassers, sondern auch eine zuverlässige Regelung der Ozonerzeugung und somit des Restozongehaltes in dem aufgereinigten Wasser nach dem Austritt aus dem Reaktionsgefäß. Aufgrund der durch die Reaktionskerzen definierten Reaktionskanäle wird in dem Reaktionsgefäß eine einheitliche Verweilzeit des aufzureinigenden Wassers sichergestellt, wobei die Verweilzeit durch Variation der Länge und/oder des Durchmessers der Reaktionskanäle flexibel an die jeweiligen Anforderungen angepasst werden kann. Ferner bilden sich in dem vorzugsweise im Wesentlichen vertikal von unten nach oben führenden ersten Reaktionskanal und in der Umlenkung von dem ersten zu dem zweiten Reaktionskanal Gasblasen aus ungelöstem Restozon und Ballastluft aus, welche das aufzureinigende Wasser nur in einem dünnen Film entlang der Wandflächen mit entsprechend größeren Strömungsgeschwindigkeiten passieren kann. Aufgrund der aus der Gasblasenbildung resultierenden großen Gas/Flüssigphasengrenze sowie aufgrund der infolge der in dem Fluidfilm lokal erhöhten Strömungsgeschwindigkeiten erzeugten Turbulenzen wird eine optimale Lösung des Ozons in der wässrigen Phase erreicht, so dass in den Reaktionskanälen durch Reaktion des gelösten Ozons mit den Verunreinigungen in dem aufzureinigenden Wasser verbrauchtes Ozon unverzüglich nachgelöst wird und somit der Ozongehalt des aufzureinigenden Wassers entlang des Strömungswegs stets nahezu der Sättigungskonzentration entspricht. Ein weiterer Vorteil des erfindungsgemäßen Reaktionsgefäßes liegt darin, dass aufgrund der in den Reaktionskanälen definierten einheitlichen Strömungswege in dem Mantelvolumen des Reaktionsgefäßes laminare Strömungsverhältnisse eingestellt werden können, so dass infolge des auch außerhalb der Reaktionskerzen anhaltenden Verbrauchs an Ozon durch Reaktion mit den in der wässrigen Phase enthaltenen Verunreinigungen in dem Mantelvolumen des Reaktionsgefäßes, von unten nach oben gesehen, ein gleichmäßig abnehmender Gradient an im Wasser gelöstem Ozon resultiert. Dies erlaubt die Entnahme einer repräsentativen Messprobe, was Voraussetzung für eine zuverlässige Regelung des Restozongehaltes in der wässrigen Phase nach dem Austritt aus dem Reaktionsgefäß ist.

Gemäß der Erfindung ist im Anschluss an den zweiten Reaktionskanal nach einer zweiten Umlenkung wenigstens ein weiterer, entgegen dem zweiten Reaktionskanal gerichteter dritter Reaktionskanal vorgesehen. Dadurch wird die Länge des durch die Reaktionskanäle definierten Strömungsweges innerhalb des Reaktionsgefäßes und somit auch die Verweilzeit vergrößert.

In Weiterbildung der Erfindung wird vorgeschlagen, die Reaktionskanäle so auszubilden, dass sie in den Übergängen von dem ersten Reaktionskanal zu dem zweiten Reaktionskanal sowie von dem zweiten Reaktionskanal in den dritten Reaktionskanal um jeweils etwa 180° umgelenkt werden. Dies ermöglicht eine kompakte Bauweise der Reaktionskerzen und fördert durch die Möglichkeit der Ausbildung von Gasblasen insbesondere in dem Übergang von dem ersten zu dem zweiten Reaktionskanal, aber auch in dem ersten und zweiten Reaktionskanal den Gaslöseprozess.

Die Reaktionskerzen werden vorzugsweise durch drei konzentrisch angeordnete, zylindrische Rohre mit untereinander zunehmendem Durchmesser gebildet, wobei das Innenvolumen des ersten, vorzugsweise von unten nach oben führenden Rohres (Steigrohr) den ersten Reaktionskanal, das Mantelvolumen des dazu konzentrisch angeordneten zweiten Rohres (Stülprohr) mit einem gegenüber dem ersten Steigrohr größeren Durchmesser den zweiten Reaktionskanal und das Mantelvolumen des äußeren Rohres (Gegenstülprohr) den dritten Reaktionskanal definieren. Die abgestufte Dimensionierung der Reaktionsrohre ist erfindungsgemäß so gewählt, dass weitestgehend die gleichen Strömungsgeschwindigkeiten erzielt werden, wie in der Zu- und Ableitung des Reaktionsgefäßes.

In Weiterbildung der Erfindung ist das den zweiten Reaktionskanal außen begrenzende Stülprohr über das sich an die Eintrittsöffnung anschließende Steigrohr gestülpt und wird an der der Eintrittsöffnung abgewandten Seite durch eine Deckelplatte verschlossen. Dadurch wird ein Ausströmen des aufzureinigenden Wassers aus dem Übergang von dem ersten in den zweiten Reaktionskanal verhindert und eine definierte Umlenkung erreicht.

An dem Übergang von dem zweiten zu dem dritten Reaktionskanal wird dies dadurch erreicht, dass das den dritten Reaktionskanal außen begrenzende Gegenstülprohr an seiner der Eintrittsöffnung zugewandten Seite durch einen Bodenabschnitt begrenzt wird, der von dem ersten Reaktionskanal durchtreten wird. Das den zweiten Reaktionskanal außen begrenzende Stülprohr stützt sich vorzugsweise über eine Bodenschlitzplatte auf dem Bodenabschnitt ab. Die Bodenschlitzplatte kann hierbei radial nach außen weisende Öffnungen aufweisen, durch die das Wasser strömen kann. Alternativ ist es möglich, radiale Stege vorzusehen, auf welchen sich das Stülprohr abstützt, und zwischen denen das Wasser umgelenkt werden kann. Durch die Bodenschlitzplatte bzw. die Stege wird nicht nur am unteren Ende des Stülprohres die Umlenkung der Strömung in den dritten Reaktionskanal sondern auch am oberen Ende des Stülprohres ein ausreichender Abstand zwischen Deckelplatte und der Austrittsöffnung des Steigrohres erreicht.

Der Bodenabschnitt weist gemäß einer bevorzugten Ausgestaltung der Erfindung einen Gewindeabschnitt mit Außengewinde auf, über welches die Reaktionskerzen in Gewindeöffnungen in einer Bodenplatte eingeschraubt werden können, welche erfindungsgemäß einen unteren Kesseldom von dem Reaktionsraum trennt. Das Einschrauben der Reaktionskerzen in die Bodenplatte erlaubt einen schnellen und einfachen Austausch der Reaktionskerzen bspw. bei Vorliegen eines Defektes. Des weiteren erlaubt diese Anordnung eine einfache Umrüstung des Reaktionsgefäßes, bspw. zur Verlängerung oder Verkürzung der Verweilzeit, indem die Reaktionskerzen gegen entsprechend längere oder breitere bzw. kürzere und dünnere Reaktionskerzen ausgetauscht werden.

Die Ableitung des aufgereinigten Schwimmbadwassers aus dem Reaktionsgefäß erfolgt erfindungsgemäß über wenigstens eine zu dem Austritt führende Abrohrleitung, die sich gemäß einer Weiterbildung dieses Erfindungsgedankens etwas oberhalb der Bodenplatte in den Reaktionsraum öffnet. Sind, wie bei einer Ausgestaltung der Erfindung vorgesehen, mehrere Abfuhrleitungen vorgesehen, so können diese am oberen Ende des Reaktionsraumes über einen bspw. ringförmigen Verbindungskanal mit einer zu dem Austritt führenden zentralen Abfuhrleitung verbunden sein.

Der Reaktionsraum wird erfindungsgemäß nach oben durch eine eine Vielzahl von Öffnungen aufweisende Deckelplatte, bspw. ein Lochblech oder dgl., von einem oberen Kesseldom getrennt, in dem eine Entlüftungsöffnung vorgesehen ist. Über diese kann Ballastluft, die ggf. noch Restozon enthält, aus dem Reaktionsgefäß abgeführt werden.

In Weiterbildung der Erfindung wird das Gas/Wassergemisch über einen horizontal angeordneten 45°-Winkel in den unteren Kesseldom eingeleitet. Hierdurch wird dem Flüssigkeitsvolumen ein Drall aufgezwungen, der eine möglichst gleichmäßige Verteilung der Ozongas-/Ballastluftblasen im Wasser bewirkt und eine größtmögliche Phasengrenze zwischen Gas und Fluid ausbildet.

Die Erfindung wird nachfolgend anhand eines Ausführungsbeispiels und der Zeichnung näher erläutert. Dabei bilden alle beschriebenen und/oder bildlich dargestellten Merkmale für sich oder in beliebiger Kombination den Gegenstand der Erfindung, unabhängig von ihrer Zusammenfassung in den Ansprüchen oder deren Rückbeziehung.

Es zeigen:
- Fig. 1: einen schematischen Längsschnitt des erfindungsgemäßen Reaktionsgefäßes zur Aufreinigung von Schwimmbadwasser mit Ozon,

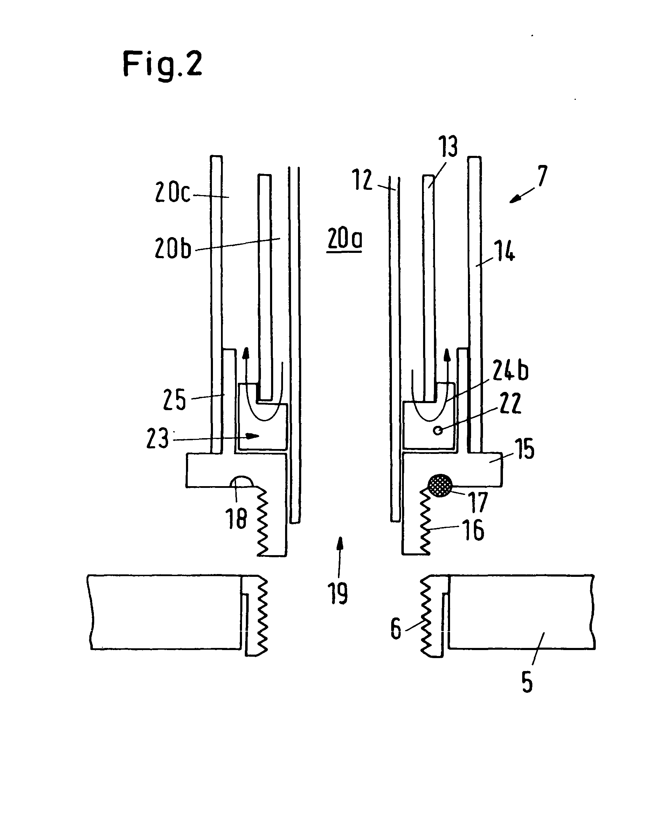

- Fig. 2: einen schematischen Teilschnitt durch eine bei dem Reaktionsgefäß verwendete Reaktionskerze in Explosionsdarstellung oberhalb einer Düsenplatte und
- Fig. 3: eine Draufsicht auf eine Bodenschlitzplatte.

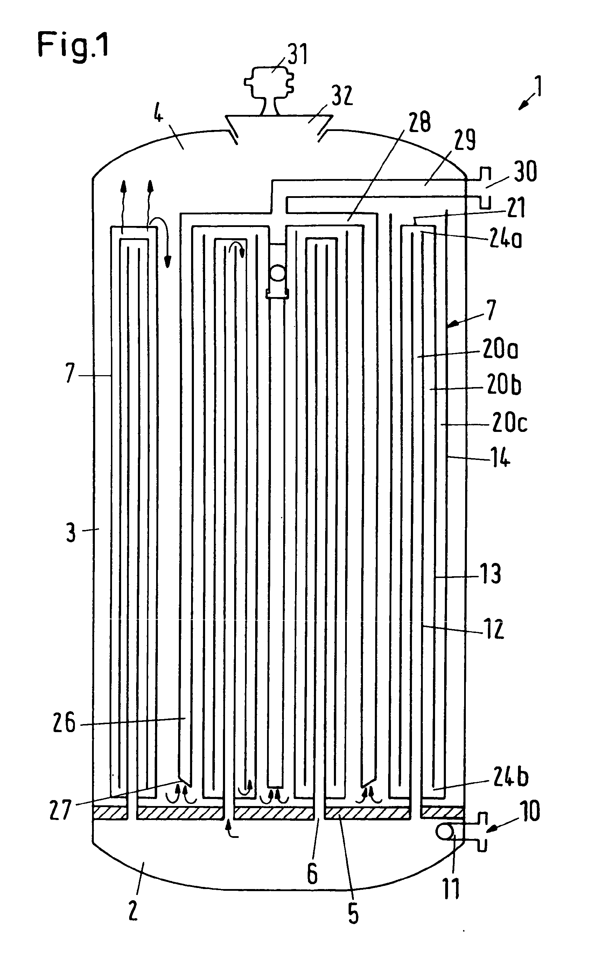

Wie sich aus Fig. 1 ergibt, ist der kesselförmige Reaktionsbehälter 1 in einen unteren Kesseldom 2 für den Eintrag und die Homogenisierung des mit Ozon beaufschlagten Schwimmbadwassers, einen mittleren, im Wesentlichen zylindrischen Reaktionsraum 3, in dem die Reaktion des Ozons mit den in dem aufzureinigenden Schwimmbadwasser befindlichen Verunreinigungen vornehmlich stattfindet, sowie einen oberen Kesseldom 4 zur Trennung des Gasgemisches aus Ballastluft und Restozon von dem aufgereinigten Schwimmbadwasser unterteilt.

Der untere Kesseldom 2 wird von dem Reaktionsraum 3 über eine Bodenplatte 5 getrennt, in welcher eine Vielzahl von Gewindeöffnungen 6 zum Einschrauben von Reaktionskerzen 7 ausgebildet ist. Nach oben ist der Reaktionsraum 3 zu dem oberen Kesseldom 4 offen.

In dem unteren Kesseldom 2 ist unterhalb der Bodenplatte 5 ein seitlicher Eintritt 10 vorgesehen, der mit einem im Wesentlichen horizontal angeordneten um etwa 45° abwinkelten Winkelstück 11 verbunden ist, um mit Ozon beaufschlagtes Schwimmbadwasser in den unteren Kesseldom 2 einzuführen. Durch die damit erreichte, im Wesentlichen tangentiale Einführung des Schwimmbadwassers in den unteren Kesseldom 2 wird dem Wasser ein Drall auferlegt, der eine gleichmäßige Verteilung der Gasphase in der wässrigen Phase und damit eine größtmögliche Gas/Flüssigphasengrenze erreicht.

Die Reaktionskerzen 7 bestehen bei der dargestellten Ausführungsform aus jeweils drei vertikalen, konzentrisch angeordneten und übereinander gestülpten Reaktionsrohren, nämlich einem Steigrohr 12, einem Stülprohr 13 und einem Gegenstülprohr 14. Es ist jedoch möglich, je nach Anforderung, auf das Gegenstülprohr 14 zu verzichten oder in entsprechender Weise zusätzliche Reaktionsrohre mit alternierender oberer / unterer Umlenkung übereinander zu stülpen.

Die Reaktionskerze 7 weist einen Bodenabschnitt 15 auf, der über einen Gewindeabschnitt 16 mit Außengewinde in eine der Gewindeöffnungen 6 der Bodenplatte 5 eingeschraubt ist. Die Abdichtung des Reaktionsraumes 3 gegenüber dem unteren Kesseldom 2 wird hierbei über eine umlaufende Dichtung 17 erreicht, die an der Unterseite des Bodenabschnittes 15 in einer Ringnut 18 angeordnet ist und gegen die Bodenplatte 5 anliegt. Alternativ kann auf die Ringnut 18 im Bodenabschnitt 15 verzichtet werden und stattdessen eine Abdichtung zwischen Außengewinde 16 und Innengewindeöffnung 6 über ein prozesskompatibles Dichthilfsmittel, bspw. ein PTFE-Dichtband, vorgesehen werden. Der Bodenabschnitt 15 weist eine zentrale Eintrittsöffnung 19 auf, die in die Gewindeöffnung 6 der Bodenplatte 5 übergeht.

An die Eintrittsöffnung 19 des Bodenabschnittes 15 schließt sich das in der Reaktionskerze 7 mittig angeordnete Steigrohr 12 an, das einen ersten Reaktionskanal 20a festlegt, der von dem Kesselboden aus gesehen im Wesentlichen vertikal nach oben führt.

Über das Steigrohr 12 ist von oben das durch eine ggf. profilierte Deckelplatte 21 verschlossene Stülprohr 13 gestülpt, das einen größeren Durchmesser aufweist als das Steigrohr 12, so dass zwischen der Außenfläche des Steigrohres 12 und der Innenfläche des Stülprohres 13 ein zweiter Reaktionskanal 20b gebildet wird. Das Stülprohr 13 stützt sich bspw. über eine profilierte Bodenschlitzplatte 22 auf dem Bodenabschnitt 15 der Reaktionskerze 7 ab.

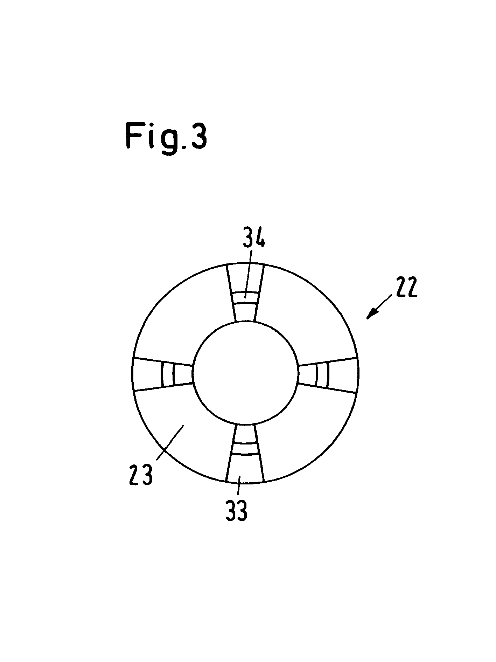

Die in Fig. 3 dargestellte Bodenschlitzplatte 22 weist in Radialrichtung verlaufende Schlitze oder Öffnungen 23 auf, die über radiale Stützstege 33 für das Stülprohr 13 getrennt werden. In den Stützstegen 33 sind Nuten 34 zur Aufnahme des Stülprohres 13 ausgebildet. Anstelle der Bodenschlitzplatte 22 können bei einer weiteren Ausführungsform auch lediglich radiale Stege an dem Bodenabschnitt 15 vorgesehen sein, auf welche sich das Stülprohr 13 abstützt. Die Bodenschlitzplatte 22 oder die radialen Stege können anstelle der in Fig. 3 gezeigten Nuten 34 Absätze aufweisen, über die das Stülprohr 13 ebenfalls exakt positioniert werden kann.

Gemeinsam mit der entsprechenden Dimensionierung des Stülprohres 13 wird hierdurch erreicht, dass die Deckelplatte 21 im Abstand über dem oberen Ende des Steigrohres 12 angeordnet ist, so dass die Strömung über eine erste Umlenkung 24a aus dem nach oben führenden Steigrohr 12 um 180° in das nach unten führende Stülprohr 13 umgeleitet wird. Ebenso wird am unteren Ende des Stülprohres 13, welches durch die Bodenschlitzplatte 22 einen Abstand zu dem Bodenabschnitt 15 der Reaktionskerze 7 aufweist, eine zweite Umlenkung der Strömung aus dem zweiten Reaktionskanal 20b erreicht.

Um das Stülprohr 13 ist ein Gegenstülprohr 14 mit wiederum größerem Durchmesser angeordnet, so dass zwischen der Außenfläche des Stülprohres 13 und der Innenfläche des Gegenstülprohres 14 ein dritter, nach oben führender Reaktionskanal 20c gebildet wird. Hierdurch wird an der zweiten Umlenkung 24b wiederum eine Umlenkung der Strömung um 180° erreicht. Am oberen Ende des Gegenstülprohres 14 tritt die Strömung in den Reaktionsraum 3 aus.

Das Gegenstülprohr 14 wird über einen an dem Bodenabschnitt 15 vorgesehenen Stutzen 25 oder dgl. gehalten und exakt positioniert. Somit werden genaue Dimensionierungen der Reaktionskanäle 20b, 20c und damit definierte Strömungsbedingungen gewährleistet.

In dem Reaktionsraum 3 sind zudem mehrere, insbesondere vier als Tauchrohre ausgebildete Abfuhrleitungen 26 vorgesehen, welche an ihrem unteren Ende, etwas oberhalb der Bodenplatte 5 bspw. abgeschrägte Eintrittsöffnungen 27 aufweisen. Die Abfuhrleitungen 26 werden an ihrem oberen Ende über einen bspw. ringförmig oder rechteckförmig ausgebildeten Verbindungskanal 28 zusammengeführt und zu einer zentralen Abfuhrleitung 29 verbunden, welche zu einem Austritt 30 für aufgereinigtes Wasser führt. Schließlich ist an dem oberen Kesseldom 4 ein Behälterdeckel 31 zur Aufnahme einer Be- und Entgasungseinheit 32 für Ballastluft und ggf. ausgegastes Restozon vorgesehen.

In dem Reaktionsgefäß 1 sind mehrere Reaktionskerzen 7 bspw. kreisförmig oder gleich verteilt angeordnet. Die Zahl und Größe der Reaktionskerzen 7 hängt von der Querschnittsfläche der Teilstromleitung für die Wasseraufreinigung, die zum Eintritt 10 des Reaktionsgefäßes 1 führt, und deren Verhältnis zur Querschnittsfläche des Steigrohres 12 ab.

Das erfindungsgemäße Reaktionsgefäß 1 ist im Wesentlichen wie oben beschrieben aufgebaut. Nachfolgend werden seine Betriebs- und Funktionsweise erläutert.

Während des Betriebs des Reaktionsgefäßes 1 strömt bei einem Druck von im Allgemeinen 0,5 bis 2,5 bar über den Eintritt 10 kontinuierlich aufzureinigendes und mit Ozon beaufschlagtes Schwimmbadwasser, also ein Gemisch aus aufzureinigendem Schwimmbadwasser mit gelöstem Ozon sowie einer Gasphase aus ungelöstem Ozon und Luft, über das Winkelstück 11 in den unteren Kesseldom 2 ein. Aufgrund der dadurch entstehenden Turbulenzen wird eine bestmögliche Durchmischung des Gas-Flüssigkeits-Gemisches erreicht, so dass die Gasblasen aus gasförmigem Ozon und Ballastluft in der wässrigen Phase im Wesentlichen gleichmäßig verteilt sind und sich eine maximal große Phasengrenze zwischen den beiden Phasen ausbildet.

Das homogene Zwei-Phasen-Gemisch tritt dann durch die Gewindeöffnungen 6 und die daran anschließenden Eintrittsöffnungen 19 in die einzelnen Reaktionskerzen 7 ein und durchströmt zunächst den in dem Steigrohr 12 ausgebildeten ersten Reaktionskanal 20a von unten nach oben. Beim Durchströmen reagiert ein von der Verweilzeit in dem ersten Reaktionskanal 20a abhängiger Anteil des gelösten Ozons mit den Verunreinigungen des Schwimmbadwassers, wodurch ein Anteil an gelöstem Ozon in dem Schwimmbadwasser verbraucht wird. In der Umlenkung 24a zwischen dem ersten und dem zweiten Reaktionskanal 20a, 20b und später über die Länge des Reaktionskanals 20a verteilt, bilden sich innerhalb kurzer Zeit nach Inbetriebnahme des Reaktionsgefäßes 1 Gasblasen aus Restozon und Luft, so dass die wässrige Phase die Gasblasen, insbesondere an der Umlenkung 24a nur als dünnen Fluidfilm entlang der Wandflächen passieren kann. Aufgrund der daraus in diesem Bereich resultierenden größeren Strömungsgeschwindigkeit des fluiden Strömungsfilmes ergeben sich lokale Turbolenzen, die den Gaslöseprozess begünstigen. An der Phasengrenze löst sich daher weiteres Ozon aus den Gasblasen in der Wasserphase, wodurch der Ozongehalt in dem Schwimmbadwasser idealerweise wieder die Sättigungskonzentration erreicht. Ferner werden in dem Reaktionskanal 20a aufgrund der lokalen Turbolenzen kleine Gasbläschen von der wässrigen Phase mitgerissen, wodurch der Gaslöseprozess weiter begünstigt wird.

Anschließend durchströmt das Schwimmbadwasser den zweiten Reaktionskanal 20b von oben nach unten, wird an der zweiten Umlenkung 24b erneut um 180° umgelenkt und durchströmt schließlich den dritten Reaktionskanal 20c von unten nach oben. Die Dimensionen der Reaktionskanäle 20a, 20b und 20c sind hierbei so bemessen, dass die Verweilzeit des Schwimmbadwassers bei dem vorgegebenen Volumenstrom in dem Reaktionsgefäß 1 zwischen drei und sieben Minuten, vorzugsweise etwa fünf Minuten beträgt. Dadurch wird eine nahezu vollständige Reaktion des Ozons mit den Verunreinigungen im Schwimmbadwasser sichergestellt. Insgesamt bewirken die Reaktionskerzen 7 somit eine kontrollierte Strömungsführung sowie den innigen Kontakt von Schwimmbadwasser und Luft-Ozon-Gemisch unter Ausbildung von aus Ballastluft und Ozon bestehenden Gasblasen. Nicht zuletzt hierdurch wird ein optimaler Gaslöseprozess gewährleistet, so dass sich in der wässrigen Phase ständig eine dem durch Reaktion mit den Verunreinigungen verbrauchten Anteil entsprechende Menge an Ozon löst.

Nach Verlassen der Reaktionskerzen 7 tritt das Zwei-Phasen-Gemisch in den oberen Teil des Reaktionsraumes 3 und den oberen Kesseldom 4 über, in dem sich die beiden Phasen infolge der unterschiedlichen Dichten voneinander trennen. Aufgrund des vergleichsweise großen Durchmessers des Reaktionsgefäßes 1 sowie der Aufteilung der Strömungswege in mehrere Reaktionskerzen 7 stellt sich in dem Mantelvolumen des Reaktionsgefäßes 1 im Gegensatz zu den nach dem Stand der Technik bekannten Reaktionsgefäßen eine im Wesentlichen laminare Strömung ein. Aufgrund dieser laminaren Strömungsverhältnisse und des auch außerhalb der Reaktionskerzen 7 anhaltenden Verbrauchs an Ozon durch Reaktion mit den in der wässrigen Phase enthaltenen Verunreinigungen stellt sich in dem Mantelvolumen des Reaktionsgefäßes 1 außerhalb der Reaktionskerzen 7 in Strömungsrichtung, also von der Bodenplatte 5 aus gesehen nach oben, ein im Wesentlichen gleichmäßig abnehmender Gradient an im Wasser gelöstem Ozon ein. Dadurch wird gewährleistet, dass die wässrige Phase über den Querschnitt des Reaktionsgefäßes 1 gleichmäßig mit Ozon beladen ist, wodurch durch Entnahme von Probenwasser und anschließende O-zongehaltsbestimmung des Probenwassers der Ozoneintrag in das aufzureinigende Wasser vor dem Reaktionsgefäß derart geregelt werden kann, dass eine Überschreitung der zulässigen Grenzwerte an Restozon in dem aufgereinigten Schwimmbadwasser zuverlässig verhindert wird. Bei den aus dem Stand der Technik bekannten Reaktionsgefäßen, bei denen infolge der turbulenten Strömungsverhältnisse die wässrige Phase über den Querschnitt des Reaktionsgefäßes gesehen nicht gleichmäßig mit Ozon beladen ist, ist eine zuverlässige Regelung des Restozongehaltes in der wässrigen Phase hingegen nicht möglich.

Das aufgereinigte Schwimmbadwasser wird über die Abfuhrleitungen 26, den Verbindungskanal 28 und die zentrale Abfuhrleitung 29 dem Austritt 30 zugeführt und anschließend wieder dem Hauptstrom des Schwimmbadwassers zugeführt. Die aus Ballastluft und nicht reagiertem Restozon bestehende Gasphase wird über den vorzugsweise automatischen Be- und Entlüfter 32 aus dem Reaktionsgefäß 1 geleitet.

### Bezugszeichenliste:

- 1: Reaktionsbehälter
- 2: unterer Kesseldom
- 3: Reaktionsraum
- 4: oberer Kesseldom
- 5: Bodenplatte
- 6: Gewindeöffnung
- 7: Reaktionskerze
- 10: Eintritt
- 11: Winkelstück
- 12: Steigrohr
- 13: Stülprohr
- 14: Gegenstülprohr
- 15: Bodenabschnitt
- 16: Gewindeabschnitt
- 17: Dichtung
- 18: Ringnut
- 19: Eintrittsöffnung
- 20a - c: Reaktionskanal
- 21: Deckelplatte
- 22: Bodenschlitzplatte
- 23: Schlitz
- 24a, b: Umlenkung
- 25: Stutzen
- 26: Abfuhrleitung
- 27: Eintrittsöffnung
- 28: Verbindungskanal
- 29: zentrale Abfuhrleitung
- 30: Austritt
- 31: Behälterdeckel
- 32: Be- und Entgasungseinheit
- 33: Stützsteg
- 34: Nut

## Patentansprüche

1. Reaktionsgefäß zur Aufbereitung von Wasser, insbesondere von Trink- oder Schwimmbadwasser, mit Ozon mit einem Eintritt (10) für ozonhaltiges Wasser, einem Austritt (30) für aufgereinigtes Wasser und einem Auslass für ggf. restozonhaltige Ballastluft, wobei in dem Reaktionsgefäß (1) Reaktionsrohre (12, 13, 14) vorgesehen sind, die Strömungswege für das ozonhaltige Wasser definieren und in denen die Reaktion zwischen dem Ozon und den in dem aufzubereitenden Wasser enthaltenen Verunreinigungen vornehmlich stattfindet, wobei die Reaktionsrohre (12, 13, 14) zu wenigstens einer Reaktionskerze (7) zusammengefasst sind, wobei im Anschluss an eine Eintrittsöffnung (15) der Reaktionskerze (7) ein erster Reaktionskanal (20a) vorgesehen ist, der nach einer ersten Umlenkung (24a) in einen entgegen dem ersten Reaktionskanal (20a) gerichteten zweiten Reaktionskanal (20b) übergeht, **dadurch gekennzeichnet, dass** der erste Reaktionskanal (20a) so angeordnet ist, dass er von unten nach oben durchströmt wird, dass der zweite Reaktionskanal (20b) so angeordnet ist, dass er von oben nach unten durchströmt wird, dass im Anschluss an den zweiten Reaktionskanal (20b) nach einer zweiten Umlenkung (24b) wenigstens ein weiterer entgegen dem zweiten Reaktionskanal (20b) gerichteter dritter Reaktionskanal (20c) vorgesehen ist.

2. Reaktionsgefäß nach Anspruch 1, **dadurch gekennzeichnet, dass** die Reaktionskanäle (20a, 20b, 20c) vertikal angeordnet sind.

3. Reaktionsgefäß nach einem der vorhergehenden Ansprüche, **dadurch gekennzeichnet, dass** die Reaktionskanäle (20a, 20b, 20c) in den Umlenkungen (24a, 24b) um jeweils ca. 180°·umgelenkt werden.

4. Reaktionsgefäß nach einem der vorhergehenden Ansprüche, **dadurch gekennzeichnet, dass** die Reaktionskerzen (7) durch insbesondere drei konzentrisch angeordnete Rohre (12,13,14) gebildet werden.

5. Reaktionsgefäß nach einem, der vorhergehenden Ansprüche, **dadurch gekennzeichnet, dass** das den zweiten Reaktionskanal (20b) außen begrenzende Reaktionsrohr (13), das über das sich an die Eintrittsöffnung (15) anschließende, den ersten Reaktionskanal (20a) definierende Reaktionsrohr (12) gestülpt ist, an der der Eintrittsöffnung (15) abgewandten Seite durch eine Deckelplatte (21) verschlossen ist.

6. Reaktionsgefäß nach einem der vorhergehenden Ansprüche, **dadurch gekennzeichnet, dass** das den dritten Reaktionskanal (20c) außen begrenzende Reaktionsrohr (14) an seiner der Eintrittsöffnung (19) zugewandten Seite durch einen Bodenabschnitt (15) begrenzt wird, der von dem ersten Reaktionskanal (20a) durchtreten wird.

7. Reaktionsgefäß nach einem der vorhergehenden Ansprüche, **dadurch gekennzeichnet, dass** sich das zweite Reaktionsrohr (13) über eine Bodenschlitzplatte (22) oder dgl. auf dem Bodenabschnitt (15) abstützt.

8. Reaktionsgefäß nach Anspruch 6 oder 7, **dadurch gekennzeichnet, dass** der Bodenabschnitt (15) einen Gewindeabschnitt (16) mit Außengewinde aufweist.

9. Reaktionsgefäß nach einem der vorhergehenden Ansprüche, **dadurch gekennzeichnet, dass** zwischen einem vorzugsweise unteren Kesseldom (2) und einem Reaktionsraum (3) eine Bodenplatte (5) vorgesehen ist, in welcher wenigstens eine Öffnung (6) ausgebildet ist, mit welcher die Eintrittsöffnung (19) der Reaktionskerze (7) verbunden ist,

10. Reaktionsgefäß nach Anspruch 9, **dadurch gekennzeichnet, dass** die Öffnung (6) ein Innengewinde aufweist, in weiches der Gewindeabschnitt (16) der Reaktionskerze (7) einschraubbar ist.

11. Reaktionsgefäß nach einem der vorhergehenden Ansprüche, **gekennzeichnet durch** wenigstens eine zu dem Austritt (30) führende Abfuhrleitung (26) zur Ableitung des aufgereinigten Schwimmbadwassers aus dem Reaktionsgefäß (1).

12. Reaktionsgefäß nach Anspruch 11, **dadurch gekennzeichnet, dass** sich die Abfuhrleitung (26) etwas oberhalb der Düsenplatte (5) in den Reaktionsraum (3) öffnet.

13. Reaktionsgefäß nach Anspruch 11 oder 12, **dadurch gekennzeichnet, dass** mehrere Abfuhrleitungen (26) vorgesehen sind, welche am oberen Ende des Reaktionsraumes (3) über einen Verbindungskanal (28) mit einer zu dem Austritt (30) führenden zentralen Abfuhrleitung (29) verbunden sind.

14. Reaktionsgefäß nach Anspruch 13, **dadurch gekennzeichnet, dass** der Verbindungskanal (28) ringförmig ist.

15. Reaktionsgefäß nach einem der vorhergehenden Ansprüche, **dadurch gekennzeichnet, dass** an dem oberen Kesseldom (4) eine Be- und Entgasungseinheit (32) vorgesehen ist.

16. Reaktionsgefäß nach einem der vorhergehenden Ansprüche, **dadurch gekennzeichnet, dass** sich an den Eintritt (10) ein vorzugsweise horizontal angeordnetes Winkelstück (11) anschließt, über welches das ozonhaltige Wasser in den unteren Kesseldom (2) eingeleitet wird.

17. Reaktionsgefäß nach Anspruch 16, **dadurch gekennzeichnet, dass** das Winkelstück (11) eine Abwinklung von etwa 45° aufweist.

18. Verfahren zur Aufbereitung von Wasser, insbesondere von Trink- oder Schwimmbadwasser, in einem Reaktionsgefäß (1) mit einem Eintritt (10) für ozonhaltiges Wasser, einem Austritt (30) für aufgereinigtes Wasser und einem Auslass für ggf. restozonhaltige Ballastluft, bei dem ozonhaltiges Wasser durch Reaktionsrohre (12, 13, 14), die Strömungswege für das ozonhaltige Wasser definieren und in denen die Reaktion zwischen dem Ozon und den in dem aufzubereitenden Wasser enthaltenen Verunreinigungen vornehmlich stattfindet, geführt wird, wobei die Reaktionsrohre (12, 13, 14) zu wenigstens einer Reaktionskerze (7) zusammengefasst sind, wobei im Anschluss an eine Eintrittsöffnung (15) der Reaktionskerze (7) ein erster Reaktionskanal (20a) vorgesehen ist, der nach einer ersten Umlenkung (24a) in einen entgegen dem ersten Reaktionskanal (20a) gerichteten zweiten Reaktionskanal (20b) übergeht, wobei der erste Reaktionskanal (20a) von unten nach oben und der zweite Reaktionskanal (20b) von oben nach unten durchströmt wird, und wobei im Anschluss an den zweiten Reaktionskanal (20b) nach einer zweiten Umlenkung (24b) ein entgegen dem zweiten Reaktionskanal (20b) gerichteter dritter Reaktionskanal (20c) vorgesehen ist.

## Claims

1. A reaction vessel for the treatment of water, in particular of drinking water or swimming pool water, with ozone, with an inflow (10) for water containing ozone, an outflow (30) for purified water and an outlet for ballast air containing any residual ozone, wherein reaction tubes (12, 13, 14) are provided in the reaction vessel (1), which tubes define flow paths for the water containing ozone, and in which tubes the reaction primarily takes place between the ozone and the impurities contained in the water to be treated, wherein the reaction tubes (12, 13, 14) are combined into at least one reaction bundle (7), wherein a first reaction passage (20a) is provided, connected to an inflow opening (15) of the reaction bundle (7), which after a first change of direction (24a) merges into a second reaction passage (20b), aligned in a direction contrary to that of the first reaction passage (20a), **characterised in that** the first reaction passage (20a) is arranged such that the flow through the passage is from the bottom upwards, **in that** the second reaction passage (20b) is arranged such that the flow through the passage is from the top downwards, and **in that** at least one third reaction passage (20c) is provided, connected to the second reaction passage (20b) after a second change of direction (24b), aligned in a direction contrary to that of the second reaction passage (20b).

2. The reaction vessel according to Claim 1, **characterised in that** the reaction passages (20a, 20b, 20c) are arranged vertically.

3. The reaction vessel according to one of the preceding claims, **characterised in that** the directions of the reaction passages (20a, 20b, 20c) are in each case changed by approx. 180°.

4. The reaction vessel according to one of the preceding claims, **characterised in that** the reaction bundles (7) are formed in particular by three concentrically arranged tubes (12, 13, 14).

5. The reaction vessel according to one of the preceding claims, **characterised in that** the reaction tube (13) externally bounding the second reaction passage (20b), which tube is placed over the reaction tube (12) defining the first reaction passage (20a) connected to the inflow opening (15), is closed on the side facing away from the inflow opening (15) by a cover plate (21).

6. The reaction vessel according to one of the preceding claims, **characterised in that** the reaction tube (14) externally bounding the third reaction passage (20c) is bounded on its side facing towards the inflow opening (19) by a base section (15), through which the first reaction passage (20a) passes.

7. The reaction vessel according to one of the preceding claims, **characterised in that** the second reaction tube (13) is supported via a slotted base plate (22), or similar, on the base section (15).

8. The reaction vessel according to Claim 6 or 7, **characterised in that** the base section (15) has a threaded section (16) with an external thread.

9. The reaction vessel according to one of the preceding claims, **characterised in that** a base plate (5) is provided between a preferably lower steam dome (2) and a reaction chamber (3), in which base plate at least one opening (6) is formed, with which the inflow opening (19) of the reaction bundle (7) is connected.

10. The reaction vessel according to Claim 9, **characterised in that** the opening (6) has an internal thread, into which the threaded section (16) of the reaction bundle (7) can be screwed.

11. The reaction vessel according to one of the preceding claims, **characterised by** at least one removal pipe (26) leading to the outflow (30) for purposes of removing the purified swimming pool water from the reaction vessel (1).

12. The reaction vessel according to Claim 11, **characterised in that** the removal pipe (26) opens into the reaction chamber (3) somewhat above the nozzle plate (5).

13. The reaction vessel according to Claim 11 or 12, **characterised in that** a plurality of removal pipes (26) are provided, which at the upper end of the reaction chamber (3) are connected via a connecting passage (28) with a central removal pipe (29) leading to the outflow (30).

14. The reaction vessel according to Claim 13, **characterised in that** the connecting passage (28) is annular.

15. The reaction vessel according to one of the preceding claims, **characterised in that** a gassing and degassing unit (32) is provided on the upper steam dome (4).

16. The reaction vessel according to one of the preceding claims, **characterised in that** a preferably horizontally arranged angle piece (11) connects onto the inflow (10), via which angle piece the water containing ozone is directed into the lower steam dome (2).

17. The reaction vessel according to Claim 16, **characterised in that** the angle piece (11) has a bend of about 45°.

18. A method for the preparation of water, in particular of drinking water or swimming pool water, in a reaction vessel (1) with an inflow (10) for water containing ozone, an outflow (30) for purified water and an outlet for ballast air containing any residual ozone, by means of which water containing ozone is directed through reaction tubes (12, 13, 14), which define flow paths for the water containing ozone, and in which the reaction between the ozone and the impurities contained in the water to be treated primarily takes place, wherein the reaction tubes (12, 13, 14) are combined into at least one reaction bundle (7), wherein a first reaction passage (20a) connected to an inflow opening (15) of the reaction bundle (7) is provided, which passage after a first change of direction (24a) merges into a second reaction passage (20b) aligned in a direction contrary to that of the first reaction passage (20a), wherein the flow through the first reaction passage (20a) is from the bottom upwards, and the flow through the second reaction passage (20b) is from the top downwards, and wherein a third reaction passage (20c) is provided, connected to the second reaction passage (20b) after a second change of direction (24b), aligned in a direction contrary to that of the second reaction passage (20b).

## Revendications

1. Récipient de réaction pour le traitement de l'eau, en particulier d'eau potable ou d'eau de piscine, avec de l'ozone comprenant une entrée (10) pour l'eau ozonisée, une sortie (30) pour l'eau purifiée et une sortie pour l'air de ballast contenant éventuellement de l'ozone résiduel, des tuyaux de réactions (12, 13, 14) étant prévus dans le récipient de réaction (1), lesquels définissent des chemins d'écoulement pour l'eau ozonisée et dans lesquels la réaction a lieu principalement entre l'ozone et les impuretés contenues dans l'eau à traiter, les tuyaux de réaction (12, 13, 14) étant regroupés en au moins une bougie de réaction (7), un premier canal de réaction (20a) étant prévu à la suite d'une ouverture d'entrée (15) de la bougie de réaction (7), lequel canal fait place après une première déviation (24a) à un second canal de réaction (20b) dirigé dans le sens contraire au premier canal de réaction (20a), **caractérisé en ce que** le premier canal de réaction (20a) est disposé de telle sorte qu'il est traversé du bas vers le haut, **en ce que** le second canal de réaction (20b) est disposé de telle sorte qu'il est traversé du haut vers le bas, **en ce qu'**il est prévu à la suite du second canal de réaction (20b) après une seconde déviation (24b) au moins un autre troisième canal de réaction (20c) dirigé dans le sens contraire au second canal de réaction (20b).

2. Récipient de réaction selon la revendication 1, **caractérisé en ce que** les canaux de réaction (20a, 20b, 20c) sont disposés verticalement.

3. Récipient de réaction selon l'une quelconque des revendications précédentes, **caractérisé en ce que**, les canaux de réaction (20a, 20b, 20c) sont déviés d'environ 180° dans chacune des déviations (24a, 24b).

4. Récipient de réaction selon l'une quelconque des revendications précédentes, **caractérisé en ce que**, les bougies de réaction (7) sont formées par en particulier trois tuyaux (12, 13, 14) disposés de façon concentrique.

5. Récipient de réaction selon l'une quelconque des revendications précédentes, **caractérisé en ce que**, le tuyau de réaction (13), délimitant le second canal de réaction (20b) à l'extérieur, qui est rabattu sur le tuyau de réaction (12) se raccordant à l'ouverture d'entrée (15) et définissant le premier canal de réaction (20a), est fermé par une plaque de couvercle (21) sur le côté opposé à l'ouverture d'entrée (15).

6. Récipient de réaction selon l'une quelconque des revendications précédentes, **caractérisé en ce que**, le tuyau de réaction (14) délimitant le troisième canal de réaction (20c) est délimité sur son côté tourné vers l'ouverture d'entrée (19) par une partie de fond (15) qui est traversée par le premier canal de réaction (20a).

7. Récipient de réaction selon l'une quelconque des revendications précédentes, **caractérisé en ce que** le second tuyau de réaction (13) s'appuie au moyen d'une plaque fendue de fond (22) ou similaire sur la partie de fond (15).

8. Récipient de réaction selon la revendication 6 ou 7, **caractérisé en ce que** la partie de fond (15) présente une partie filetée (16) avec filetage extérieur.

9. Récipient de réaction selon l'une quelconque des revendications précédentes, **caractérisé en ce qu'**il est prévu entre un dôme de prise de vapeur (2) de préférence inférieur et un espace de réaction (3) une plaque de fond (5), dans laquelle est réalisée au moins une ouverture (6) à laquelle l'ouverture d'entrée (19) de la bougie de réaction (7) est reliée.

10. Récipient de réaction selon la revendication 9, **caractérisé en ce que** l'ouverture (6) présente un filetage intérieur dans lequel la partie filetée (16) de la bougie de réaction (7) peut être vissée.

11. Récipient de réaction selon l'une quelconque des revendications précédentes, **caractérisé par** au moins une conduite d'évacuation (26) conduisant à la sortie (30) pour la déviation de l'eau de piscine purifiée du récipient de réaction (1).

12. Récipient de réaction selon la revendication 11, **caractérisé en ce que** la conduite d'évacuation (26) s'ouvre légèrement au-dessus de la plaque de buse (5) dans l'espace de réaction (3).

13. Récipient de réaction selon la revendication 11 ou 12, **caractérisé en ce qu'**il est prévu plusieurs conduites d'évacuation (26), qui sont reliées sur l'extrémité supérieure de l'espace de réaction (3) par un canal de liaison (28) à une conduite d'évacuation (29) centrale aboutissant à la sortie (30).

14. Récipient de réaction selon la revendication 13, **caractérisé en ce que** le canal de liaison (28) est de forme annulaire.

15. Récipient de réaction selon l'une quelconque des revendications précédentes, **caractérisé en ce qu'**une unité de gazage et de dégazage (32) est prévue sur le dôme de prise de vapeur (4) supérieur.

16. Récipient de réaction selon l'une quelconque des revendications précédentes, **caractérisé en ce qu'**une pièce d'angle (11), disposée de préférence horizontalement, par laquelle l'eau ozonisée est introduite dans le dôme de prise de vapeur (2) inférieur, se raccorde à l'entrée (10).

17. Récipient de réaction selon la revendication 16, **caractérisé en ce que** la pièce d'angle (11) présente un coudage d'environ 45°.

18. Procédé pour le traitement d'eau, en particulier de l'eau potable ou de l'eau de piscine, dans un récipient de réaction (1) comprenant une entrée (10) pour de l'eau ozonisée, une sortie (30) pour l'eau purifiée et une sortie pour de l'air de ballast contenant éventuellement de l'ozone résiduel, dans lequel de l'eau ozonisée est guidée par des tuyaux de réaction (12, 13, 14), qui définissent des chemins d'écoulement pour l'eau ozonisée et dans lesquels la réaction a lieu principalement entre l'ozone et les impuretés contenues dans l'eau à traiter, les tuyaux de réaction (12, 13, 14) étant regroupés en au moins une bougie de réaction (7), un premier canal de réaction (20a) étant prévu à la suite d'une ouverture d'entrée (15) de la bougie de réaction (7), lequel canal fait place après une première déviation (24a) à un second canal de réaction (20b) dirigé dans le sens contraire au premier canal de réaction (20a), le premier canal de réaction (20a) étant traversé du bas vers le haut et le second canal de réaction (20b) du haut vers le bas, et un troisième canal de réaction (20c) dirigé dans le sens contraire au second canal de réaction (20b) étant prévu à la suite du second canal de réaction (20b) après une seconde déviation (24b).
